Europäisches Patentamt

(19) European Patent Office

Office européen des brevets

(11) EP 0 793 217 B1

(12) EUROPÄISCHE PATENTSCHRIFT

(45) Veröffentlichungstag und Bekanntmachung des Hinweises auf die Patenterteilung:
24.07.2002 Patentblatt 2002/30

(51) Int Cl.7: G10K 11/00

(21) Anmeldenummer: 97101663.9

(22) Anmeldetag: 04.02.1997

(54) Hüllkörper für eine Hydrophonanordnung

Hydrophone cover

Gaine pour dispositif hydrophone

(84) Benannte Vertragsstaaten:
DE FR GB IT

(30) Priorität: 27.02.1996 DE 19607303

(43) Veröffentlichungstag der Anmeldung:
03.09.1997 Patentblatt 1997/36

(73) Patentinhaber: STN ATLAS Elektronik GmbH
28305 Bremen (DE)

(72) Erfinder:
• Arens, Egidius, Dipl.-Ing.
28832 Achim (DE)
• Brenner, Axel, Dipl.-Ing.
28259 Bremen (DE)

• Busch, Rainer, Dr.-Ing.
26131 Oldenburg (DE)

(74) Vertreter: Thul, Hermann, Dipl.-Phys. et al
Zentrale Patentabteilung,
Rheinmetall AG,
Rheinmetall Allee 1
40476 Düsseldorf (DE)

(56) Entgegenhaltungen:
US-A- 4 784 898      US-A- 4 997 705
US-A- 5 221 324

• PATENT ABSTRACTS OF JAPAN vol. 016, no. 088 (E-1173), 4. März 1992 (1992-03-04) & JP 03 270499 A (FURUNO ELECTRIC CO LTD), 2. Dezember 1991 (1991-12-02)

**Beschreibung**

Die Erfindung betrifft einen Hüllkörper für eine Hydrophonanordnung.

In der Wasserschalltechnik werden Hydrophonanordnungen zum Senden und Empfangen von Schallwellen eingesetzt. Die Hydrophonanordnung weist beispielsweise die Form einer Zylinderbasis oder einer Flachbasis auf und ist an der Außenwandung eines Trägerfahrzeugs, z. B. eines Oberflächenschiffs oder U-Boots, befestigt. Ein Hüllkörper für die Hydrophonanordnung ist ebenfalls an die Außenwandung des Trägerfahrzeugs montiert und bildet ihren äußeren Abschluß. Zur besseren akustischen Ankopplung der Hydrophonanordnung an das umgebende Wasser, über das die Schallwellen beim Senden und/oder Empfang übertragen werden, ist der Hüllkörper mit Wasser gefüllt oder durchflutet.

Der Hüllkörper bietet für die Hydrophonanordnung einen mechanischen Schutz und durch seinen stromlinienförmigen Aufbau gleichzeitig einen akustischen Schutz gegen Strömungsgeräusche, die bei Fahrt entstehen, da an der Hydrophonanordnung selbst dann keine Wasserströmung auftritt. Auch bei hohen Fahrstufen kann die Gefahr von Kavitation durch entsprechende Formgebung des Hüllkörpers herabgesetzt werden.

Damit die Hydrophonanordnung ungestört Schallwellen empfängt, die von anderen Wasserfahrzeugen abgestrahlt werden, oder sendet, ist es erstrebenswert, daß der Hüllkörper weder reflektiert, noch dämpft. Es ist bekannt, Hüllkörper aus Gummi herzustellen, da ein solcher Werkstoff einen akustischen Wellenwiderstand aufweist, der ungefähr gleich dem des ihn umgebenden Wassers ist. Durch den geringen Impedanzsprung an der Hüllkörperaußenfläche sind Durchstrahlungsdämpfung und Reflexionsfaktor für einfallende Schallwellen niedrig. Wegen der geringen Festigkeit von Gummi gegen mechanische Verformung muß jedoch ein sehr hoher konstruktiver Aufwand getrieben werden, um einen formsteifen Hüllkörper mit guten akustischen Eigenschaften zu erhalten. Beispielsweise werden Stahlseile als Gerüst für eine Kugelform verwendet, die von einem Gummimantel umgeben sind. Ein solcher Hüllkörper wird mit Wasser gefüllt und unter Druck gesetzt.

Konstruktiv und herstellungstechnisch weniger aufwendig sind Hüllkörper aus glasfaserverstärktem Kunststoff (GFK). Ihre Schichtdicken werden entsprechend den statischen und dynamischen Belastungen dimensioniert. Ein solcher Hüllkörper ist beispielsweise in der DE-OS 31 50 456 angegeben, er kann für Hydrophonanordnungen, die zum Senden und/oder Empfangen von Schallwellen im Frequenzbereich bis zu 100 kHz ausgelegt sind, mit ausreichender Formsteifigkeit gebaut werden. Für senkrecht einfallende Schallwellen ist die akustische Impedanz des Hüllkörpers ungefähr gleich der von Wasser und damit akustisch transparent.

Bei schrägem Schalleinfall auf die Wandung des Hüllkörpers wird jedoch ein Teil der Schallwellen sowohl an der Außenseite des Hüllkörpers, als auch nach Durchtritt an der Hydrophonanordnung und der Innenseite des Hüllkörpers oft sogar mehrfach reflektiert, so daß der Empfang eingeschränkt ist.

Der Erfindung liegt die Aufgabe zugrunde, einen Hüllkörper der eingangs genannten Art zu schaffen, der auch bei schrägem Schalleinfall eine gute akustische Anpassung an das Wasser gewährleistet und Mehrfachreflexionen im Innenraum des Hüllkörpers auf die Hydrophonanordnung nicht zuläßt.

Diese Aufgabe ist für einen Hüllkörper zum Schutz einer Hydrophonanordnung erfindungsgemäß durch die Merkmale im Kennzeichenteil des Anspruchs 1 gelöst.

In dem Artikel "Möglichkeiten zur Herstellung von Bauteilen aus geschäumten Metallen" aus "Pulvermetallurgie in Wissenschaft und Praxis", Band 9, "Innovative und wirtschaftliche Bauteile durch Pulvermetallurgie", Vorträge anläßlich des Symposiums am 25./26. November 1993 in Hagen, VDI-Verlag, werden Eigenschaften, Herstellungsverfahren und Anwendungsgebiete für geschäumte Metalle angegeben. Insbesondere wird das Material in der Automobilbranche für Knautschzonen und Seitenaufprallschutz verwendet, da der poröse Metallschaum mechanisch einwirkende Energie absorbiert. Weiterhin werden Formteile aus Schaummetall zur Kapselung schallemittierender Komponenten, z.B. Motoren, verwendet, da sie im Vergleich zu Kunststoffschäumen höheren Temperaturen standhalten. Auch als Impedanzwandler in der Ultraschallmeßtechnik spielen Metallschäume eine Rolle.

Diese Eigenschaften von Metallschäumen lassen nicht den Schluß zu, daß Metallschäume als Material zum Aufbau eines Hüllkörpers geeignet sind, der gerade dadurch ausgezeichnet ist, daß er für Schallwellen transparent und nicht absorbierend ist.

Die Erfindung geht von der Möglichkeit aus, daß der Elastizitätsmodul in Abhängigkeit von der Dichte eines Metallschaums in weiten Grenzen variiert werden kann. Durch die Variation der Dichte, d.h. der Porosität des Metallschaums, ist ein Verhältnis zwischen Dichte und Elastizitätsmodul einstellbar und damit die Masse eines Körpers aus Metallschaum einstellbar, wie in dem genannten Artikel ausgeführt.

Nach Taschenbuch Elektrotechnik, herausgegeben von E. Philippow, "Nachrichtentechnik", Band 3, VEB-Verlag Technik Berlin, 1969, Kapitel 6.2.3.3 "Schallgeschwindigkeit in festen Körpern", Seiten 1383, 1384, breitet sich Schall in einem festen Körper als Longitudinal- und Transversalwelle aus. Bei der Longitudinalwelle erfolgt die Teilchenbewegung in Richtung der Schallausbreitung. Es handelt sich also um eine Kompressionswelle. Bei der Transversalwelle erfolgt die Schwingung der Mediumteilchen senkrecht zur Ausbreitungsrichtung. Die Ausbreitungsgeschwindigkeiten dieser Wellentypen sind unterschiedlich, wobei die Ausbreitungsgeschwindigkeit der Longitudinalwelle stets größer als die der Transversalwelle ist. Beide Ausbreitungsgeschwindigkeiten sind abhängig vom Verhältnis von Elastizitätsmodul und Dichte und von der Poissonschen Konstanten, die ein Maß für die relative Querverkürzung bezogen auf die relative Längsdehnung ist. Je größer die Poissonsche Konstante ist, desto größer ist die Differenz zwischen den beiden Ausbreitungsgeschwindigkeiten. Diese Eigenschaft der Schallausbreitung in festen Körpern führt bei schrägem Schalleinfall auf einen Hüllkörper aus glasfaserverstärktem Kunststoff (GFK) bzw. aus einem Schichtverbund, wie er in der DE-OS 36 42 747 beschrieben ist, zu Reflexionen auch im Innenraum des Hüllkörpers zwischen Hydrophonanordnung und Innenseite des Hüllkörpers, die besonders bei hohen Frequenzen zu Fehlpeilungen mit der Hydrophonanordnung führen. Der Vorteil eines erfindungsgemäßen Hüllkörpers aus Metallschaum nach den Ansprüchen 1, 2 und 3 besteht insbesondere darin, daß die Poissonsche Konstante bei Metallschäumen ungefähr gleich Null ist. Dadurch ergibt sich ein nur geringer Unterschied zwischen der transversalen und der longitudinalen Ausbreitungsgeschwindigkeit, nämlich um den Faktor $1/\sqrt{2}$.

Im Gegensatz dazu beträgt bei GFK der Faktor 1/2,5 aufgrund einer Poisson-Konstante von ca. 0,4.

Die akustische Impedanz eines Körpers ist gleich dem Produkt aus Dichte und Ausbreitungsgeschwindigkeit. Die akustische Impedanz soll bei einem Hüllkörper der des Wassers möglichst nahekommen, so daß bei einer Schallausbreitung keine Impedanzsprünge zwischen Hüllkörper und Übertragungsmedium entstehen, sondern der Hüllkörper wie eine Wasserschicht für den einfallenden Schall wirkt. Der Vorteil des erfindungsgemäßen Hüllkörpers nach Anspruch 4 besteht darin, daß durch die Einstellung des Elastizitätsmoduls und der Dichte des Metallschaums mit Hilfe der Treibmittelzumischung zum Metall nicht nur die Ausbreitungsgeschwindigkeiten für Longitudinal- und Transversalwellen eingestellt wird, sondern auch seine akustische Impedanz in einer Größenordnung, die gleich der des umgebenden Wassers ist. Da sich die beiden Ausbreitungsgeschwindigkeiten des Schalls für die Longitudinal- und die Transversalwelle nur um den Faktor $\sqrt{2}$ unterscheiden und der Wellenwiderstand ungefähr dem des umgebenden Wassers ist, ist eine geringe Durchgangsdämpfung auch bei beliebiger Schalleinfallsrichtung auf den Hüllkörper gegeben. Totalreflexionen, die bei bestimmten Schalleinfallswinkeln bei GFK-Hüllkörpern auftreten, werden vermieden. Der erfindungsgemäße Hüllkörper nach Anspruch 4 ist richtungsunabhängig schalldurchlässig. Damit ist außerdem der Vorteil gegeben, daß Wandungen des Hüllkörpers bezüglich der Hydrophonanordnung einen solchen Winkel aufweisen dürfen, daß Mehrfachreflexionen zwischen Hydrophonanordnung und Hüllkörper nicht auftreten, die zu Fehlpeilungen führen, sondern empfangener, an der Hydrophonanordnung reflektierter Schall durch den Hüllkörper zum größten Teil abgestrahlt und zum kleineren Teil so reflektiert wird, daß er nicht wieder von der Hydrophonanordnung empfangen wird.

Ein weiterer Vorteil des erfindungsgemäßen Hüllkörpers besteht darin, daß die Wandung des Hüllkörpers unmittelbar der äußeren Kontur des Trägerfahrzeugs der Hydrophonanordnung angepaßt werden kann, da der Winkelbezug zwischen Hydrophonanordnung und Hüllkörperwandung frei gewählt werden kann, so daß der Hüllkörper keine Beeinträchtigung für das Strömungsverhalten des Trägerfahrzeugs darstellt und Strömungsgeräusche vermieden werden, die das Nutz/Störverhältnis von Empfangssignalen der Hydrophonanordnung herabsetzen.

Ein weiterer Vorteil des erfindungsgemäßen Hüllkörpers nach den Ansprüchen 1 bis 4 besteht darin, daß der durch die Porosität eingestellte dynamisch-mechanische Elastizitätsmodul und der damit verbundene Verlustfaktor von Metallschäumen frequenzunabhängig ist und somit auch seine vom Elastizitätsmodul und der Dichte abhängige akustische Impedanz, so daß frequenzabhängige Verluste wie z.B. bei Hüllkörpern aus GFK nicht auftreten.

Eine besonders vorteilhafte Weiterbildung des erfindungsgemäßen Hüllkörpers ist in Anspruch 5 angegeben.

Eine Wandung aus geschäumtem Aluminium oder einer geschäumten Aluminiumlegierung mit einer Dichte von ca. 800 kg/m$^3$ und einem Elastizitätsmodul von $6,4 \cdot 10^9$ N/m$^2$, weist eine akustische Impedanz von ca. $2 \cdot 10^6$ kg/m$^2$s auf, die nur geringfügig größer als die von Wasser mit $1,5 \cdot 10^6$ kg/m$^2$s ist. Die akustische Impedanz für die Transversalwelle ist exakt gleich der von Wasser, so daß sich keine Biegewellen ausbilden und kein Störschall abgestrahlt wird. Der erfindungsgemäße Hüllkörper nach Anspruch 5 zeichnet sich durch große Festigkeit und geringe Masse aus und ist somit besonders geeignet für ein akustisches Fenster in der Außenhaut eines U-Boots, für einen Hüllkörper eines von einem Hubschrauber abgelassenen Dipping-Sonars, für Bojen, für Minen oder in gleicher Weise für einen Sonardom eines Oberflächenschiffs.

Der Vorteil der erfindungsgemäßen Weiterbildung des Hüllkörpers nach Anspruch 6 besteht darin, daß die Wandung vor Korrosion geschützt ist. Eine Gummierung oder ein Überzug aus Kunststoff, z.B. Polyurethan, von ca. 1 mm ist durchaus ausreichend und für die akustischen Eigenschaften des Hüllkörpers ohne Belang. Vorteilhaft ist es, auch die Innenseite des Hüllkörpers wasserdicht zu überziehen, wenn der Hüllkörper mit Seewasser geflutet ist, um auch von daher einen Schutz gegen Korrosion zu garantieren.

Der Vorteil der erfindungsgemäßen Weiterbildung des Hüllköpers nach Anspruch 7 besteht darin, daß eine Matte aus Gummi oder glasfaserverstärktem Kunststoff (GFK) geringer Schichtdicke verwendet werden kann, die mit einer Polyurethanspachtelmasse auf das geschäumte Metall aufgebracht wird. Die Schicht aus Spachtelmasse ist von so geringer Dicke, z.B. kleiner als ein Zehntel einer Schallwellenlänge, daß sie die akustischen Eigenschaften des Hüllkörpers nicht beeinflußt.

Der Vorteil der erfindungsgemäßen Weiterbildung des Hüllkörpers nach Anspruch 8 besteht darin, daß vorgefertigte Platten aus Metallschaum verwendet werden können. Formstücke zum Verbinden der Platten dienen zur Festigkeit des gesamten Aufbaus. Besonders vorteilhaft ist es auch, die Platten in ein Netz aus elastisch verformbarem Material einzubinden, so daß Stöße oder Verformungen aufgrund von Druck von dem Netz aufgenommen werden können.

Auch besonders großräumige Hüllkörper sind durch den Plattenaufbau in einfacher Weise herstellbar.

Der Vorteil der erfindungsgemäßen Weiterbildung des Hüllkörpers nach Anspruch 9 besteht darin, daß auch ein beliebig geformter Hüllkörper durch die Verwendung eines hohlen Formteils, das mit dem aufschäumbaren Material gefüllt und aufgeschäumt wird, in einfacher Weise herstellbar ist. Als Material für die Form eignet sich Keramik oder Stahl. Kleine Hüllkörper für eine hochfrequente Hydrophonanordnung sind mit diesem Verfahren vorteilhaft herstellbar, wie sie beispielsweise in Unterwasserwaffen eingesetzt werden.

Die Dicke der Wandung wird gemäß Anspruch 10 nach den mechanischen Erfordernissen bezüglich der Stabilität des Hüllkörpers dimensioniert. Aufgrund der großen mechanischen Belastbarkeit des geschäumten Metalls sind akustische Verluste bei den benötigten Wandungsdicken von z.B. 10 mm auch bei hohen Frequenzen gering.

## Patentansprüche

1. Hüllkörper zum Schutz einer Hydrophonanordnung, **gekennzeichnet durch** eine Wandung aus einem nach einem pulvermetallurgischen Verfahren hergestellten, geschäumten Metall.

2. Hüllkörper nach Anspruch 1, **dadurch gekennzeichnet, daß** das Metall rein ist.

3. Hüllkörper nach Anspruch 1, **dadurch gekennzeichnet, daß** das Metall legiert ist.

4. Hüllkörper nach einem der Ansprüche 1 bis 3, **dadurch gekennzeichnet, daß** die Dichte des geschäumten Metalls und sein Elastizitätsmodul durch Treibmittelteilchen so eingestellt sind, daß seine akustische Impedanz in ungefähr gleich der des umgebenden Wassers ist.

5. Hüllkörper nach Anspruch 1 oder 2, **dadurch gekennzeichnet, daß** die Wandung aus geschäumtem Aluminium oder einer geschäumten Aluminiumlegierung besteht.

6. Hüllkörper nach einem der Ansprüche 1 bis 5, **dadurch gekennzeichnet, daß** mindestens seine Außenseite mit einem wasserdichten Material überzogen ist.

7. Hüllkörper nach Anspruch 6, **dadurch gekennzeichnet, daß** eine Schicht aus wasserdichtem Material mit einer Polyurethanspachtelmasse auf das geschäumte Metall aufgebracht ist.

8. Hüllkörper nach einem der Ansprüche 1 bis 7, **dadurch gekennzeichnet, daß** die Wandung aus einzelnen Metallschaumplatten zusammengesetzt ist, daß die Metallschaumplatten durch Formstücke oder ein Netz aus elastisch verformbarem Material miteinander verbunden sind.

9. Hüllkörper nach einem der Ansprüche 1 bis 7, **dadurch gekennzeichnet, daß** ein hohles Formteil für die Wandung mit dem aufschäumbaren Material gefüllt und erwärmt wird.

10. Hüllkörper nach einem der Ansprüche 1 bis 9, **dadurch gekennzeichnet, daß** die Dicke der Wandung abhängig von den mechanischen Belastungen gewählt ist.

## Claims

1. Cover for protecting a hydrophone arrangement, **characterized by** a wall made of a foamed metal produced by a powder-metallurgical process.

2. Cover according to Claim 1, **characterized in that** the metal is pure.

3. Cover according to Claim 1, **characterized in that** the metal is alloyed.

4. Cover according to one of Claims 1 to 3, **characterized in that** the density of the foamed metal and its modulus of elasticity are adjusted by blowing agent particles in such a way that its acoustic impedance is approximately equal to that of the surrounding water.

5. Cover according to Claim 1 or 2, **characterized in that** the wall consists of a foamed aluminium or of a foamed aluminium alloy.

6. Cover according to one of Claims 1 to 5, **characterized in that** at least its outer side is coated with a waterproof material.

7. Cover according to Claim 6, **characterized in that** a layer of waterproof material is applied with a polyurethane knifing filler to the foamed metal.

**8.** Cover according to one of Claims 1 to 7, **characterized in that** the wall is made up of individual foamed metal plates, that the foamed metal plates are connected to one another by shaped pieces or a mesh of elastically deformable material.

**9.** Cover according to one of Claims 1 to 7, **characterized in that** a hollow mould part for the wall is filled with the foamable material and heated.

**10.** Cover according to one of Claims 1 to 9, **characterized in that** the thickness of the wall is chosen according to the mechanical loads.

## Revendications

**1.** Corps enveloppant destiné à protéger un arrangement d'hydrophones, **caractérisé par** une paroi en métal moussé réalisé selon un procédé métallurgique des poudres.

**2.** Corps enveloppant selon la revendication 1, **caractérisé en ce que** le métal est pur.

**3.** Corps enveloppant selon la revendication 1, **caractérisé en ce que** le métal est allié.

**4.** Corps enveloppant selon l'une des revendications 1 à 3, **caractérisé en ce que** la densité du métal moussé et son module d'élasticité sont réglés par des particules d'agent moussant de manière à ce que son impédance acoustique soit à peu près égale à celle de l'eau environnante.

**5.** Corps enveloppant selon la revendication 1 ou 2, **caractérisé en ce que** la paroi se compose d'aluminium moussé où d'un alliage d'aluminium moussé.

**6.** Corps enveloppant selon l'une des revendications 1 à 5, **caractérisé en ce qu'**au moins son côté extérieur est recouvert d'un matériau étanche à l'eau.

**7.** Corps enveloppant selon la revendication 6, **caractérisé en ce qu'**une couche de matériau étanche à l'eau est appliquée sur le métal moussé avec un mastic en polyuréthane.

**8.** Corps enveloppant selon l'une des revendications 1 à 7, **caractérisé en ce que** la paroi se compose de panneaux de mousse métallique individuels, que les panneaux de mousse métallique sont reliés entre eux par des pièces moulées ou un réseau de matériau élastique déformable.

**9.** Corps enveloppant selon l'une des revendications 1 à 7, **caractérisé en ce que** qu'une pièce moulée creuse formant la paroi est remplie de matériau expansible et réchauffée.

**10.** Corps enveloppant selon l'une des revendications 1 à 9, **caractérisé en ce que** l'épaisseur de la paroi est choisie en fonction des contraintes mécaniques.